# FASCICULE DE BREVET EUROPEEN

(11) **EP 4 351 752 B1**
(45) Date de publication et mention de la délivrance du brevet: **02.04.2025**
(21) Numéro de dépôt: 22736326.4
(22) Date de dépôt: 08.06.2022
(51) Int. Cl.: A63G 21/22

(54) **DISPOSITIF DE TRANSPORT PAR TYROLIENNE MOTORISEE, ENSEMBLE ET PROCEDE DE TRANSPORT ASSOCIES**
VORRICHTUNG ZUM TRANSPORT DURCH MOTORISIERTE ZUGSCHRAUBE UND ZUGEHÖRIGE TRANSPORTANORDNUNG UND VERFAHREN
DEVICE FOR TRANSPORT BY MOTORIZED ZIPWIRE, AND ASSOCIATED TRANSPORT ASSEMBLY AND METHOD

(30) Priorité: 08.06.2021 FR 2106036
(43) Date de publication de la demande: 17.04.2024
(73) Titulaire: Pole D'Activités Sportives Culturelles Et Touristiques, 66760 Porté-Puymorens (FR)
(72) Inventeur: SCHAACK, Floran, 66760 Porté-Puymorens (FR); CARRE, Guillaume, 69210 Bully (FR); ALLO, Baptiste, Joel, Michel, 38300 Bourgoin Jallieu (FR); SELLIER, Bruno, 94140 Fontenay sous bois (FR)
(74) Mandataire: Rhein, Alain
(86) Numéro de dépôt international: PCT/FR2022/051094
(87) Numéro de publication internationale: WO 2022/258929

(56) Documents cités:
- WO-A2-2009/143529
- JP-A- 2020 082 788
- KR-A- 20170 104 074
- KR-B1- 102 044 911
- US-A- 5 920 226

## Description

### DOMAINE TECHNIQUE

La présente invention concerne le domaine général du transport, et plus précisément des dispositifs de transport de personnes ou de produits depuis un point haut jusqu'à un point bas, par exemple sur le principe des transports à tyrolienne.

Plus particulièrement, l'invention concerne un dispositif de transport pour transporter une charge d'une première altitude à une seconde altitude inférieure à la première altitude en étant accroché à une ligne de guidage et en descendant le long de cette dernière par gravité.

L'invention concerne en outre un ensemble de transport incluant un tel dispositif de transport ainsi qu'une ligne de guidage.

L'invention concerne également un procédé de transport comprenant une étape de transport d'une charge d'une première altitude à une seconde altitude inférieure à la première altitude par un dispositif de transport, lors de laquelle le dispositif de transport est accroché à une ligne de guidage et descend le long de cette dernière par gravité,

### TECHNIQUE ANTERIEURE

Dans le domaine des transports, et plus précisément des transports récréatifs, on connaît en particulier les installations de tyrolienne, généralement installées au sein de parcs de loisirs acrobatiques en hauteur ou dans des zones de loisir. Les installations de tyrolienne sont des dispositifs ludiques permettant à un utilisateur de descendre par gravité le long d'un câble positionné à une certaine hauteur vis-à-vis du sol. L'utilisateur est suspendu sous le câble par un harnais, lui-même accroché à un chariot (ou une simple poulie) roulant sur le câble. Le câble lui-même est tendu entre un point haut et un point bas, et le chariot descend donc pendant l'activité ludique du point haut au point bas. Le câble souple peut être remplacé par un rail ou un tube rigide, mais le principe reste le même.

Les différentes installations de tyroliennes présentent des longueurs de câble, et donc de parcours ludique, qui sont très variables. Certaines tyroliennes font une dizaine de mètres, tandis que d'autres peuvent en faire plusieurs centaines. Pour les tyroliennes très courtes, il est connu de mettre en œuvre un deuxième câble, ou ligne de rappel, courant le long du premier câble, et qui permet de faire remonter le chariot lorsqu'il est au point bas, simplement en tirant sur le deuxième câble depuis le point haut, jusqu'à ce que le chariot atteigne à nouveau le point haut. Ceci permet de remettre le chariot en position pour recommencer l'activité ludique de descente du chariot, auquel est alors suspendu un autre utilisateur.

Par ailleurs, pour procéder au remontage du chariot du point bas jusqu'au point haut, il également connu de simplement décrocher le chariot (généralement avec plusieurs autres chariots similaires) du câble lorsqu'il est au point bas, et de le remonter jusqu'au point haut par exemple à l'aide d'une voiture ou d'une camionnette.

Bien que ces systèmes de remontée des chariots de tyrolienne connus remplissent globalement leurs fonctions, ils ne sont toutefois pas totalement satisfaisants, et présentent de fait un certain nombre d'inconvénients.

Ainsi, le principe des lignes de rappel n'est par exemple adapté qu'à certaines tyroliennes très courtes, où l'utilisateur rappelle généralement lui-même le chariot en tirant sur le second câble. Pour les tyroliennes plus longues (dès quelques dizaines de mètres), les lignes de rappel ne sont donc pas adaptées. En effet, le remontage de chaque chariot le long du premier câble prendrait trop de temps, nécessiterait un effort conséquent ainsi qu'un enroulage du second câble important, et empêcherait l'utilisation de la tyrolienne pendant une durée conséquente (un utilisateur ne pouvant descendre pendant le remontage du chariot en position haute). De plus, les lignes de rappel sont exclues pour des tyroliennes plus complexes, comme les tyroliennes à virage.

Par ailleurs, en particulier pour les tyroliennes plus longues, le fait de devoir décrocher plusieurs chariots du câble lorsqu'ils sont au point bas, puis les remonter jusqu'au point haut, pour ensuite les raccrocher au câble, s'avère généralement long, fastidieux, complexe, et source d'erreurs, de détérioration du matériel voire d'accidents de personne. Ceci nécessite en outre d'impliquer une personne spécialisée pendant une durée importante, et oblige généralement à utiliser un véhicule ainsi qu'un nombre conséquent de chariots (la remontée n'étant pas intéressante pour seulement quelques chariots), tout ce qui précède entraînant des coûts d'exploitation relativement élevés.

En définitive, les systèmes et procédés de remontage de chariot de tyrolienne connus s'avèrent longs, peu pratiques, coûteux, et contraignant à réaliser, tout en présentant un niveau de sécurité qui n'est pas optimal.

De plus, les systèmes de transport à tyrolienne connus ne permettent pas de maîtriser de façon fine et contrôlée la vitesse de descente, avec au mieux une faculté de freinage proportionnelle à la vitesse. Sur ces systèmes connus, les conditions de descente (et en premier lieu la vitesse), sont très sensibles à des paramètres extérieurs (vent, traînée de l'utilisateur), de sorte qu'il est impossible de maintenir la vitesse dans une plage déterminée.

Un autre problème qui peut être rencontré avec les systèmes de transport à tyrolienne connus est celui d'éventuels arrêts intempestifs, en cours de descente, avant d'atteindre le point d'arrivée. De tels arrêts intempestifs peuvent survenir par exemple en cas de vent contraire et/ou de traînée trop importante, notamment si le câble présente un point de pente nulle en partie courante.

Le document d'art antérieur KR102044911B1 divulgue un dispositif de transport selon le préambule de la revendication 1.

### EXPOSE DE L'INVENTION

Les objets assignés à la présente invention visent en conséquence à remédier aux différents inconvénients énumérés précédemment et à proposer un nouveau dispositif de transport qui, tout en étant particulièrement fiable, présente une grande praticité d'utilisation et permet en particulier d'être remonté facilement rapidement et à faible coût d'une altitude basse à une altitude haute, avec un excellent bilan énergétique. Un autre objet de l'invention vise à proposer un nouveau dispositif de transport particulièrement économe en énergie et en effort.

Un autre objet de l'invention vise à proposer un nouveau dispositif de transport dont la conception lui assure une mise en œuvre dans des conditions de sécurité optimales pour un objet ou une personne transporté(e).

Un autre objet de l'invention vise à proposer un nouveau dispositif de transport dont la conception et le principe d'utilisation lui permettent d'être installé facilement sur une ligne de guidage, sans nécessiter d'opérations complexes et fréquentes d'accrochage ou de décrochage de la ligne de guidage.

Un autre objet de l'invention vise à proposer un nouveau dispositif de transport léger et compact.

Un autre objet de l'invention vise à proposer un nouveau dispositif de transport qui ne met en œuvre qu'un nombre réduit de pièces distinctes et dont l'installation est rapide et ne nécessite qu'un outillage minimal standard.

Un autre objet de l'invention vise à proposer un nouveau dispositif de transport dont la conception lui assure un coût de fabrication limité.

Un autre objet de l'invention vise à proposer un nouveau dispositif de transport dont l'entretien est réduit, simple, rapide, et à coûts maîtrisés.

Un autre objet de l'invention vise à proposer un nouveau dispositif de transport dont la conception permet de contrôler avec efficacité et précision la vitesse de descente, en s'affranchissant des conditions externes (vent ou autre), et d'améliorer ainsi l'expérience utilisateur et la sécurité en évitant en particulier une vitesse excessive à l'arrivée.

Un autre objet de l'invention vise à proposer un nouvel ensemble de transport dont la conception lui assure une mise en œuvre facile, rapide, et économique, et ce dans des conditions de sécurité optimales.

Un autre objet de l'invention vise à proposer un nouveau procédé de transport qui est facile, rapide, sûr et économique, tout en présentant un excellent bilan énergétique.

Les objets assignés à l'invention sont atteints à l'aide d'un dispositif de transport pour transporter une charge d'une première altitude à une seconde altitude inférieure à la première altitude en étant accroché à une ligne de guidage et en descendant le long de cette dernière par gravité, ledit dispositif de transport étant caractérisé en ce qu'il comprend :
- un moteur électrique, conçu pour au moins faire remonter le dispositif de transport de la seconde altitude vers la première altitude, le long de ladite ligne de guidage,
- une première batterie, conçue pour alimenter ledit moteur électrique,
- un générateur électrique comprenant une partie tournante, ledit générateur électrique étant conçu pour recharger ladite première batterie lorsque ladite partie tournante est mise en rotation sous l'effet de la descente du dispositif de transport de la première altitude vers la seconde altitude,
- un moyen de gestion électronique, configuré d'une part pour détecter un niveau de charge de ladite première batterie, et d'autre part pour entraîner une émission par ladite première batterie d'un courant de fuite lorsque ledit moyen de gestion électronique détecte que le niveau de charge de ladite première batterie dépasse une valeur seuil de charge prédéterminée,
- au moins un moyen de réception de courant, conçu pour absorber ledit courant de fuite provenant de ladite première batterie.

Les objets assignés à l'invention sont en outre atteints à l'aide d'un ensemble de transport comprenant d'une part une ligne de guidage et d'autre part un dispositif de transport pour transporter une charge d'une première altitude à une seconde altitude inférieure à la première altitude en étant accroché à ladite ligne de guidage et en descendant le long de cette dernière par gravité, ledit dispositif de transport étant conforme à celui de l'invention décrit ci-avant.

Les objets assignés à l'invention sont également atteints à l'aide d'un procédé de transport comprenant une étape de transport d'une charge d'une première altitude à une seconde altitude inférieure à la première altitude par un dispositif de transport, lors de laquelle le dispositif de transport est accroché à une ligne de guidage et descend le long de cette dernière par gravité, le procédé étant caractérisé en ce qu'il comprend en outre au moins :
- une étape de génération d'électricité, lors de laquelle une partie tournante d'un générateur électrique du dispositif de transport est mise en rotation sous l'effet de la descente du dispositif de transport de la première altitude vers la seconde altitude,
- une étape de rechargement d'une première batterie du dispositif de transport grâce à l'électricité générée lors de ladite étape de génération,
- une étape de remontage du dispositif de transport de la seconde altitude vers la première altitude, le long de ladite ligne de guidage, grâce à un moteur électrique alimenté au moins par ladite première batterie une étape de détection, lors de laquelle on détecte qu'un niveau de charge de ladite première batterie dépasse une valeur seuil de charge prédéterminée,
- une étape d'émission, par ladite première batterie, d'un courant de fuite,
- une étape d'absorption, par un moyen de réception de courant, dudit courant de fuite provenant de ladite première batterie.

### DESCRIPTIF SOMMAIRE DES DESSINS

D'autres particularités et avantages de l'invention apparaîtront et ressortiront plus en détail à la lecture de la description faite ci-après, en référence aux dessins annexés, donnés uniquement à titre d'exemples illustratifs et non limitatifs, dans lesquels :
La figure 1 est une vue en perspective de côté d'un exemple de dispositif de transport selon l'invention, accroché à une ligne de guidage.
La figure 2 est une vue en perspective du même côté du dispositif de la figure 1 dépourvu de certains de ses capots, pour laisser apparaître ses éléments internes.
La figure 3 est une vue en perspective du même côté du dispositif des figures 1 et 2 dépourvu de ses capots externes et de plusieurs de ses éléments de châssis interne.
La figure 4 est une vue en perspective, depuis un autre côté, du dispositif de transport des figures 1 à 3, accroché à la ligne de guidage.
La figure 5 est une vue en perspective du même côté du dispositif de la figure 4 dépourvu de certains de ses capots, pour laisser apparaître ses éléments internes.
La figure 6 est une vue en perspective du même côté du dispositif des figures 4 et 5 dépourvu de ses capots et de plusieurs de ses éléments de châssis interne.
La figure 7 est une vue schématique de côté d'un dispositif de transport conforme à l'invention, qui descend le long d'une ligne de guidage d'une première altitude vers une seconde altitude en étant muni d'une charge (ici une personne) à transporter.
La figure 8 est une vue schématique de côté du dispositif de transport de la figure 7, qui remonte le long de la ligne de guidage de la seconde altitude vers la première altitude, sans la charge.
La figure 9 est une représentation synoptique fonctionnelle d'une variante du dispositif de transport de la figure 1, avec le moyen de gestion électronique en son centre.

### MEILLEURE MANIERE DE REALISER L'INVENTION

Comme illustré aux figures, l'invention concerne, selon un premier aspect, un dispositif de transport 1 pour transporter une charge 2 d'une première altitude 3 à une seconde altitude 4 inférieure à la première altitude 3 en étant accroché à une ligne de guidage 5 et en descendant le long de cette dernière par gravité. En d'autres termes, le dispositif de transport 1 est préférentiellement conçu pour recevoir ladite charge 2 et la transporter en descendant de la première altitude 3 à la seconde altitude 4, le dispositif de transport 1 se déplaçant, le long de ladite ligne de guidage 2, en même temps que ladite charge 2 et de préférence selon le même mouvement. La première altitude 3 correspond en particulier à une première position ou zone, tandis que la seconde altitude 4 correspond de préférence à une seconde position ou zone qui se situe à la fois en dessous, dans le plan vertical, de la première position ou zone, et à distance, dans le plan horizontal, de cette dernière. Plus précisément, ladite seconde altitude 4 n'est avantageusement pas juste en-dessous de ladite première altitude 3, mais également décalée de cette dernière horizontalement. Ladite ligne de guidage 5 s'étend avantageusement entre ladite première altitude 3 et ladite seconde altitude 4, et présente de préférence une inclinaison sur plus de la moitié de sa longueur, de préférence sur plus de 80% de sa longueur, plus préférentiellement sur plus de 90% de sa longueur voire la totalité de sa longueur.

Selon un premier mode de réalisation particulier, la ligne de guidage 5 est suspendue, par exemple à des arbres ou tout autre élément structurel naturel ou artificiel (rochers, mâts...) dans un parc de loisir sportif. Selon un deuxième mode de réalisation particulier la ligne de guidage 5 est posée au sol, par exemple à la manière d'un rail. Il est également envisageable qu'une partie de la ligne de guidage 5 soit posée au sol, et qu'une autre partie soit suspendue.

Selon un exemple particulier, de préférence en combinaison avec le premier mode de réalisation particulier ci-avant, le dispositif de transport 1 est un dispositif de transport par tyrolienne, comme illustré aux figures. Le dispositif de transport 1 peut éventuellement être un dispositif de transport par tyrolienne à virage, ou un dispositif de transport à tyrolienne classique (sans virage), longue ou courte, de préférence longue. Ladite ligne de guidage 2 présente avantageusement une longueur supérieure à 10 m, de préférence supérieure à 20 m, plus préférentiellement supérieure à 30 m, plus préférentiellement encore supérieure à 50 m voire supérieure à 100 m.

Ladite charge 2 est en particulier une personne, par exemple une personne pesant entre 15 et 150 kg. Ladite charge 2 comprend donc en particulier au moins une personne devant être transportée de la première altitude 3 vers la seconde altitude 4 par gravité, et plus précisément à l'aide de la propre gravité de ladite personne.

Plus généralement, le dispositif de transport 1 est préférentiellement conçu pour supporter le poids de ladite charge 2 de façon à ce que, lorsque ledit dispositif de transport 1 est accroché à ladite ligne de guidage 5 au niveau de ladite première altitude 3, il soit entraîné vers le bas et plus précisément vers ladite seconde altitude 4 grâce en particulier au poids de ladite charge 2, lequel confère une certaine énergie cinétique audit dispositif de transport 1.

Ledit dispositif de transport 1 est selon, une variante illustrée aux figures, conçu pour transporter ladite charge 2 de façon que celle-ci soit suspendue à ce dernier, en particulier en-dessous de celui-ci. Ledit dispositif de transport 1 comprend par exemple un ou plusieurs points d'attache conçu(s) 6 pour recevoir un moyen d'attache 7 de la charge 2 audit dispositif de transport 1. Dans l'exemple illustré aux figures, chaque point d'attache 6 est formé par un orifice respectif prévu au niveau d'une partie inférieure du dispositif de transport 1.

Selon une variante, ladite ligne de guidage 2 est souple, et comprend par exemple un câble ou un filin, comme illustré aux figures. En d'autres termes, selon ce dernier exemple, ladite ligne de guidage 2 ne présente pas de tenue mécanique propre.

Selon une autre variante, ladite ligne de guidage 2 est rigide, et comprend par exemple un rail ou un tube. Ainsi, ladite ligne de guidage 2 présente, selon ce dernier exemple, une tenue mécanique propre. Une telle configuration est par exemple adaptée lorsque le dispositif de transport 1 est un dispositif de tyrolienne à virage, mais pas uniquement.

Selon l'invention, ledit dispositif de transport 1 comprend au moins :
- un moteur électrique 8, conçu pour au moins faire remonter le dispositif de transport 1 de la seconde altitude 4 vers la première altitude 3, le long de ladite ligne de guidage 2, et
- une première batterie 9, conçue pour alimenter ledit moteur électrique 8.

De préférence, ledit moteur électrique 8 et ladite première batterie 9 sont dimensionnés pour pouvoir faire remonter le dispositif de transport 1 le long de ladite ligne de guidage 5 de ladite seconde altitude 4 vers ladite première altitude 3 uniquement sans ladite charge 2. Ainsi, le moteur électrique 8 en particulier, n'est de préférence pas conçu, et par exemple par assez puissant, pour faire remonter le dispositif de transport 1 le long de la ligne de guidage 5 lorsque le dispositif de transport 1 supporte ladite charge 2. Une telle configuration permet de mettre en œuvre un moteur électrique 8 et une première batterie 9 légers et de dimensions réduites. Ladite première batterie 9 est, comme cela est connu, avantageusement conçue pour stocker de l'énergie électrique.

Le moteur électrique 8 permet ainsi avantageusement de déplacer le dispositif de transport 1 le long de la ligne de guidage 2, depuis la seconde altitude 4 (ou éventuellement une autre altitude intermédiaire plus basse que la première altitude 3), vers et plus avantageusement jusqu'à la première altitude 3. Une telle configuration permet au dispositif de transport 1 d'être remis en position pour une nouvelle descente sans recourir à la désolidarisation de ce dernier et de la ligne de guidage 1 ni à une ligne de rappel pour effectuer le remontage normal du dispositif de déplacement de la seconde altitude 4 à la première altitude 3.

De préférence, dans la présente description, la descente du dispositif de transport 1 désigne le déplacement de ce dernier de la première altitude 3 vers la seconde altitude 4, le dispositif de transport 1 supportant préférentiellement ladite charge 2 pendant ledit déplacement, tandis que la remontée ou le remontage du dispositif de transport 1 désigne le déplacement de ce dernier de la seconde altitude 4 vers la première altitude 3, le dispositif de transport 1 étant préférentiellement à vide c'est-à-dire sans ladite charge 2 pendant ledit déplacement.

Le dispositif de transport 1 comprend avantageusement un ou plusieurs capots 19. Chaque capot 19 forme en particulier une partie externe du dispositif de transport 1 permettant de protéger ou de cacher des éléments internes du dispositif de transport 1, par exemple le moteur 8, et comme on le verra ci-après, le générateur électrique 10, la première courroie de transmission 14, etc.

Le dispositif de transport 1 comprend par ailleurs de préférence un ou plusieurs éléments de châssis 20. Chaque élément de châssis 20 forme en particulier une partie interne du dispositif de transport 1 supporter un ou plusieurs éléments internes du dispositif de transport 1, par exemple le moteur 8, et comme on le verra ci-après, le générateur électrique 10, la première courroie de transmission 14, etc. Lesdits éléments de châssis 20 sont dans l'exemple illustré aux figures des plaques, par exemple en métal. Lesdits éléments de châssis 20 sont avantageusement cachés (au moins à plus de 50%) par les capots 19, et ces derniers sont de préférence fixés auxdits éléments de châssis 20.

Conformément à l'invention, le dispositif de transport comprend en outre au moins un générateur électrique 10 comprenant une partie tournante 11. Ainsi, selon l'invention, ledit générateur électrique 10 est conçu pour recharger ladite première batterie 9 lorsque ladite partie tournante 11 est mise en rotation sous l'effet de la descente du dispositif de transport 1 de la première altitude 3 vers la seconde altitude 4. En d'autres termes, ladite partie tournante 11 est avantageusement conçue pour être mise en rotation sous l'effet de la descente du dispositif de transport de la première altitude 3 vers la seconde altitude 4. De cette façon, il est possible de recharger au moins en partie ladite première batterie 9 lorsque ledit dispositif de transport 1 descend le long de la ligne de guidage 5, en profitant du fait que ladite charge 2 entraîne par gravité le dispositif de transport 1 en descente vers la seconde altitude 4, produisant ainsi une certaine énergie cinétique. Le dispositif de transport 1 est donc avantageusement conçu pour récupérer au moins une partie de l'énergie potentielle perdue lorsqu'il passe, chargé de ladite charge 2, de la première altitude 3 à la seconde altitude 4, et fournir cette énergie récupérer audit générateur 10 afin qu'il produise de l'énergie électrique. Le dispositif de transport 1 est donc avantageusement conçu pour remonter de manière autonome de la seconde altitude 4 vers (et de préférence jusqu'à) la première altitude 3, à l'aide de préférence d'au moins une partie de l'énergie récupérée lors de sa descente.

De manière préférentielle, le dispositif de transport 1 est conçu pour récupérer de l'énergie cinétique lorsqu'il descend le long de ladite ligne de guidage 5 de la première altitude 3 vers la seconde altitude 4, afin de mettre en rotation ladite partie tournante 11, et ainsi transformer ladite énergie cinétique en énergie électrique pour recharger la première batterie 9. Ladite énergie cinétique est avantageusement au moins en partie générée par gravité à l'aide du poids de ladite charge 2, et dans une moindre mesure à l'aide du poids du dispositif de transport 1, lors de la descente du dispositif de transport 1.

De manière préférentielle, ladite première batterie 9 comprend au moins un supercondensateur. En effet, la charge de la première batterie 9 par le générateur électrique 10 est généralement très rapide et intense, et nécessite une capacité de chargement particulièrement importante sur de courtes durées, en substance le temps de la descente du dispositif de transport 1 de la première altitude 3 à la seconde altitude 4, qui dure souvent quelques secondes à quelques dizaines de secondes, voire quelques minutes. Un supercondensateur présente habituellement des densités de puissance et d'énergie supérieures aux batteries classiques, par exemple les batteries lithium-ion.

De manière générale, le dispositif de transport 1 est de préférence conçu pour appliquer une force de freinage s'opposant à sa descente le long de la ligne de guidage 5, l'application de cette force de freinage permettant de récupérer de l'énergie cinétique afin de la convertir en énergie électrique par le générateur électrique 10.

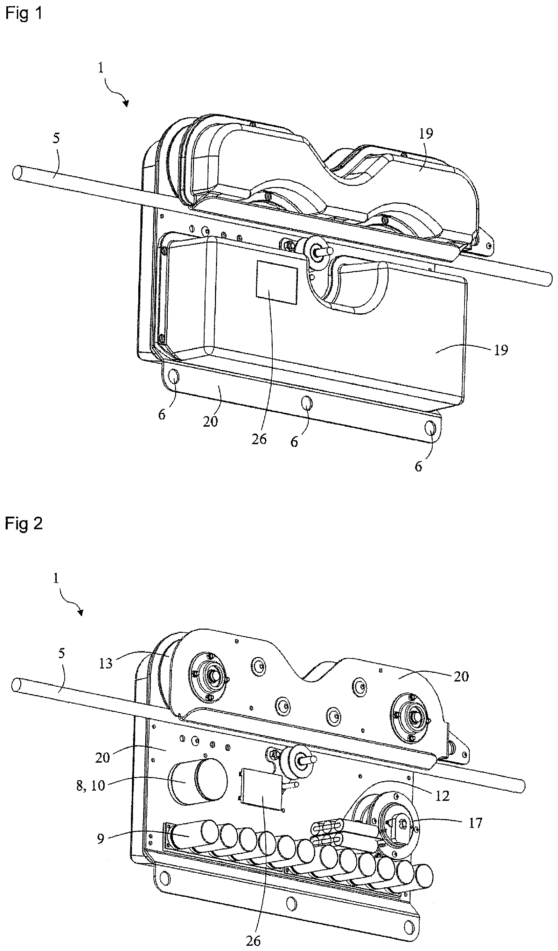

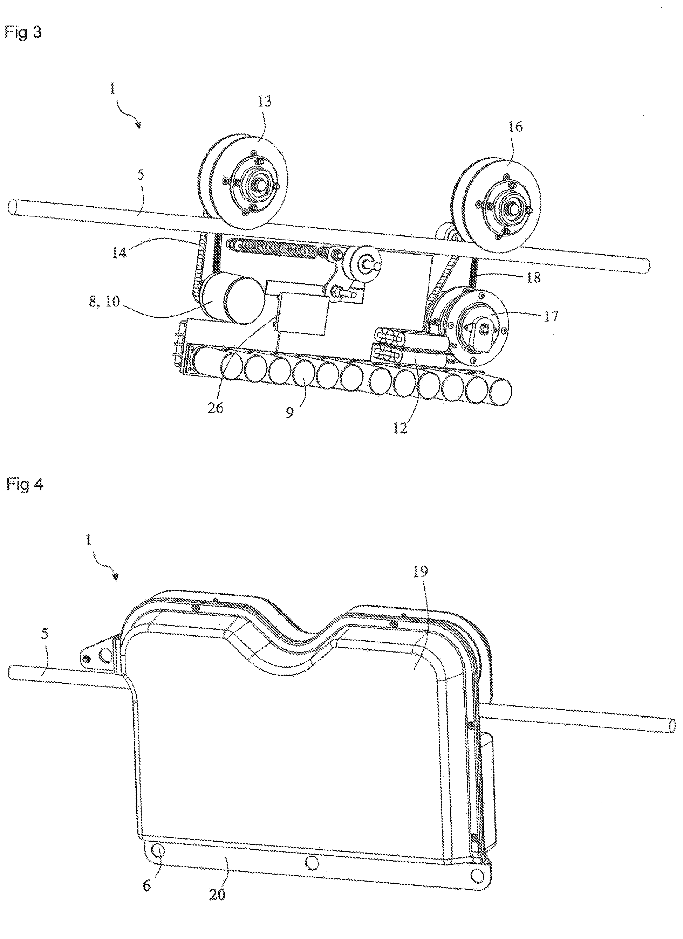

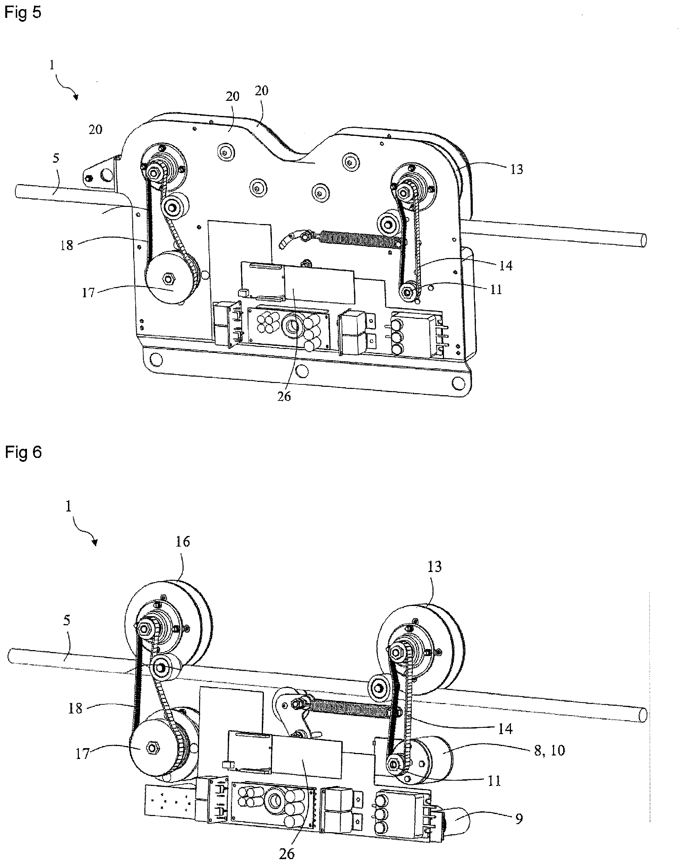

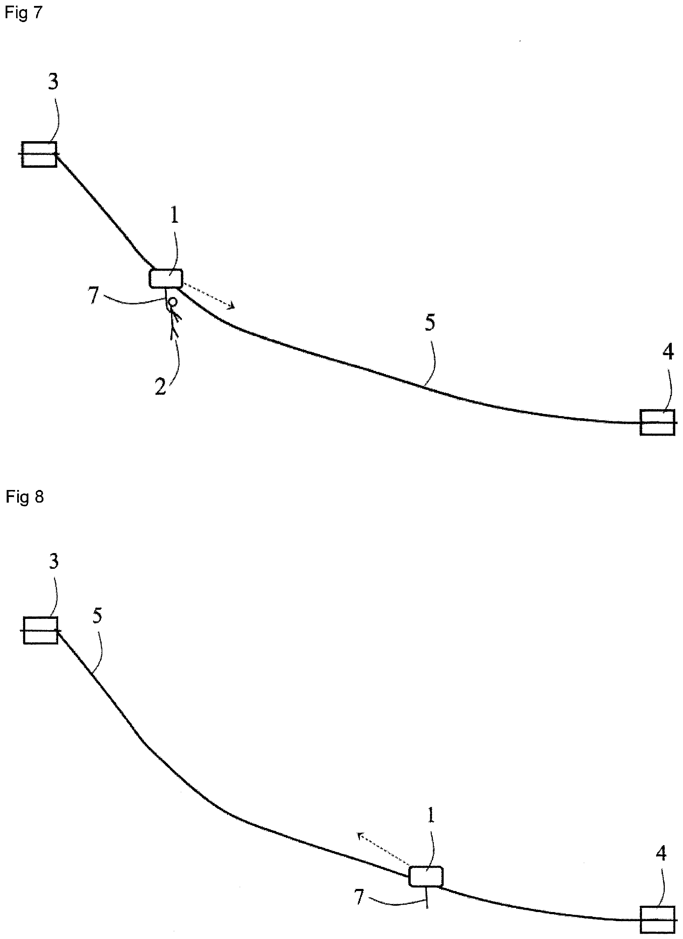

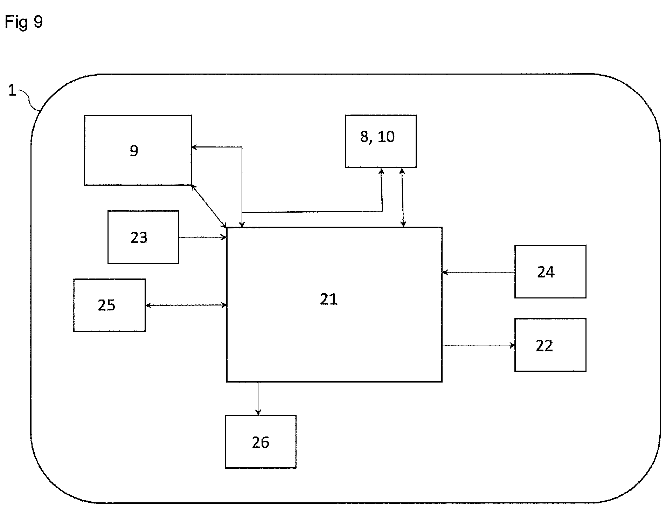

Selon l'invention, le dispositif de transport 1 comprend en outre au moins un moyen de gestion électronique 21, non visible aux figures 1 à 8, mais dont une représentation synoptique est illustrée à titre illustratif uniquement et non limitatif, à la figure 9. Ledit moyen de gestion électronique 21 comprend par exemple une carte électronique. Ledit moyen de gestion électronique 21 est, conformément à l'invention, configuré d'une part pour détecter un niveau de charge de ladite première batterie 9, et d'autre part pour entraîner une émission par ladite première batterie 9 d'un courant de fuite lorsque ledit moyen de gestion électronique 21 détecte que le niveau de charge de ladite première batterie 9 dépasse une valeur seuil de charge prédéterminée. Ainsi, ledit moyen de gestion électronique 21 est avantageusement conçu pour déterminer le niveau de charge de ladite première batterie 9, c'est-à-dire l'énergie électrique qui est encore accumulée au sein de cette dernière. Préférentiellement, ledit moyen de gestion électronique 21 permet en outre de provoquer l'émission, par ladite première batterie 9 et hors de cette dernière, du courant de fuite lorsqu'il détermine que ladite première batterie 9 est chargée au-delà de ladite valeur seuil de charge. Ledit moyen de gestion électronique est donc de façon avantageuse configuré pour provoquer le déchargement, de préférence partiel, de ladite première batterie 9, lorsque cette dernière est trop chargée. En effet, lorsque ladite première batterie 9 est chargée au-delà d'un certain seuil, en particulier lorsqu'elle est chargée à 100% ou au voisinage de 100% (par exemple entre 95% et 100%), il existe un risque de voir ladite première batterie 9 être endommagée au moment où ledit générateur électrique 10 charge ladite première batterie 9, c'est-à-dire lorsque ladite partie tournante 11 est mise en rotation sous l'effet de la descente du dispositif de transport 1 de la première altitude 3 vers la seconde altitude 4. En d'autres termes, le courant de fuite permet avantageusement d'éviter que le trop-plein d'énergie électrique fourni à ladite première batterie 9 par ledit générateur 10 lors de la descente du dispositif de transport 1 dégrade ladite première batterie 9, celle-ci ayant tendance à se détériorer quand elle reçoit un fort courant électrique tout en étant déjà complètement ou quasi- complètement chargée. Il est donc préférable de conserver ladite première batterie 9 légèrement déchargée afin d'éviter sa détérioration, ce qui est permis par le courant de fuite déclenché par le moyen de gestion électronique 21.

Selon l'invention, le dispositif de transport 1 comprend au moins un moyen de réception de courant 22, conçu pour absorber ledit courant de fuite provenant de ladite première batterie 9. Ledit moyen de réception de courant 22 comprend de préférence au moins une résistance 22, mais il peut alternativement ou en combinaison comprendre être au moins un autre élément capable de recevoir de l'énergie électrique (à haute intensité préférentiellement). Par exemple, ledit moyen de réception de courant 22 comprend au moins un supercondensateur (non illustré). Celui-ci est de préférence dimensionné de manière convenable de façon à ne pas entraîner de surcoût important (il doit être assez petit), et peut recevoir de l'énergie électrique même quand il est chargé à 100%, puisqu'il importe peu qu'il soit dégradé. Lorsque ledit moyen de réception de courant 22 comprend un supercondensateur, celui-ci sert ainsi avantageusement de « *tampon* » dans lequel se vide le courant de fuite (et donc l'énergie générée en surplus), pour protéger ladite première batterie 9.. Lorsque ledit moyen de réception de courant 22 comprend une résistance 22, celle-ci est préférentiellement conçue pour transformer ledit courant de fuite (qui est en substance de l'énergie électrique) en énergie thermique, c'est-à-dire que ladite résistance 22 est de préférence conçue pour recevoir ledit courant de fuite et chauffer en conséquence. La chaleur produite par ladite résistance 22 est ensuite avantageusement dissipée dans l'air environnant. Ledit moyen de gestion électronique 21 permet donc de contrôler de manière avantageuse l'envoi du courant de fuite de la première batterie 9 à ladite résistance 22 dès qu'il détecte que ladite première batterie 9 est chargée au-delà de la valeur seuil de charge prédéterminée, laquelle peut par exemple être 90% ou 95%. En d'autres termes encore, le moyen de gestion électronique 21 est de préférence conçu pour commander le déchargement partiel, via ledit courant de fuite, de ladite première batterie 9 dans ledit moyen de réception de courant 22, lorsque ladite valeur seuil de charge prédéterminée de ladite première batterie 9 est dépassée.

De manière avantageuse, ledit moyen de gestion électronique 21 est conçu pour entraîner l'émission du courant de fuite, par ladite première batterie 9 lorsqu'elle dépasse une valeur seuil de charge prédéterminée, seulement lorsque ladite partie tournante 11 est mise en rotation, et de préférence seulement lorsque ladite partie tournante 11 est mise en rotation sous l'effet de la descente du dispositif de transport 1 de la première altitude 3 vers la seconde altitude 4 le long de ladite ligne de guidage 5. Ainsi, ledit moyen de gestion électronique 21 est avantageusement conçu pour provoquer la dissipation (volontaire) d'une partie de l'énergie électrique accumulée par ladite première batterie 9 dans ledit moyen de réception de courant 22 (chauffant donc ladite résistance 22 par exemple) pendant la descente du dispositif de transport 1 le long de la ligne de guidage 5 de la première altitude 3 vers la seconde altitude 4, c'est-à-dire pendant que ladite partie tournante 11 est mise en rotation et que ledit générateur électrique 10 recharge ladite première batterie 9. Ledit dispositif de transport 1 est donc de préférence conçu pour à la fois décharger (via ledit moyen de réception de courant 22) et charger (via ledit générateur électrique 10) ladite première batterie 9 lors de sa descente, de façon à éviter à celle-ci d'être en surcharge et donc de subir une dégradation.

Avantageusement, ledit dispositif de transport 1 comprend en outre un échangeur thermique (non illustré) relié à ladite résistance 22 pour refroidir cette dernière. Ledit échangeur thermique est de manière préférentielle conçu pour refroidir ladite résistance 22 thermique par déplacement d'air lors de la descente du dispositif de guidage 1 de la première altitude 3 vers ladite seconde altitude 4 le long de ladite ligne de guidage 5. Ceci facilite la dissipation de la chaleur de la résistance en profitant de la vitesse du dispositif de transport 1 le long de la ligne de guidage 5 induite par le poids de ladite charge 2 embarquée par ledit dispositif de transport 1.

Ledit moyen de gestion électronique 21 peut être conçu pour provoquer l'émission dudit courant de fuite de manière intermittente ou continue, afin d'atteindre un niveau d'évacuation de chaleur optimal (notamment grâce audit échangeur thermique).

Selon un mode de réalisation particulier, le dispositif de transport 1 comprend en outre une seconde batterie 12 distincte de la première batterie 9 et présentant une vitesse de charge plus lente que cette dernière. Ladite seconde batterie 12 est également conçue pour alimenter ledit moteur électrique 8, en particulier lorsque ladite première batterie 9 est déchargée. Ainsi, ladite seconde batterie 12 permet avantageusement au moteur électrique 8 de compléter le trajet du dispositif de transport 1, lorsque ce dernier remonte la ligne de guidage 5 de la première altitude 3 vers la seconde altitude 4, dans le cas où ladite première batterie 9 est déchargée et ne peut donc plus alimenter ledit moteur électrique 8. Optionnellement, la seconde batterie 12 est conçue pour charger au moins en partie ladite première batterie 9, et/ou encore pour absorber les éventuels trop-pleins d'énergie électrique provenant du générateur électrique 10 et qui ne peuvent être récupérés par ladite première batterie 9. Par exemple, ladite seconde batterie 12 est une batterie lithium-ion.

Selon une première variante particulière de l'invention, illustrée au figures, ledit moteur électrique 8 et ledit générateur électrique 10 sont confondus. Ladite partie tournante 11 forme par exemple l'arbre du moteur 8, ou est solidaire à ce dernier. Selon une seconde variante particulière de l'invention, ledit moteur électrique 8 et ledit générateur électrique 10 sont distincts.

Selon un mode de réalisation particulier, préférentiellement lié à la première variante mentionnée ci-avant, ladite partie tournante 11 fait en outre partie du moteur 8 et est donc réversible. Ladite partie tournante 11 fait donc avantageusement partie, selon ce dernier mode de réalisation, à la fois du moteur 8 et du générateur 10. Ladite partie tournante 11 est donc de préférence conçue pour tourner dans deux sens de rotation contraires, l'un permettant la génération d'électricité via ledit générateur 10 (qui forme de préférence aussi le moteur 8) lorsque le dispositif de transport 1 descend le long de la ligne de guidage 5 (muni de ladite charge 2), l'autre permettant l'actionnement du moteur 8 (qui forme de préférence aussi le générateur 10) lorsque le dispositif de transport 1 remonte le long de la ligne de guidage 5 (à vide, sans ladite charge 2). Le moteur électrique 8 est par exemple une dynamo (ou génératrice de courant continu).

Selon un mode de réalisation particulier, illustré aux figures, le dispositif de transport 1 comprend au moins un premier galet de roulement 13 conçu pour rouler le long de la ligne de guidage 5, ledit premier galet de roulement 13 étant relié à ladite partie tournante 11 afin de l'entraîner en rotation selon un premier sens de rotation, lors de la descente du dispositif de transport 1 de la première altitude 3 vers la seconde altitude 4. Ainsi, en particulier lorsque ladite partie tournante 11 fait partie du moteur 8 et est réversible, ledit moteur 8 est conçu pour mettre en rotation ladite partie tournante 11 selon un deuxième sens de rotation lorsqu'il fonctionne, ledit deuxième sens de rotation étant de préférence opposé au premier sens de rotation. Ladite partie tournante 11 est donc reliée audit premier galet de roulement 13 afin de l'entraîner en rotation, entraînant ainsi la remontée du dispositif de transport 1 de la seconde altitude 4 vers la première altitude 3. De préférence, dans le premier sens de rotation (de la partie tournante 11 donc), le dispositif de transport 1 descend le long de la ligne de guidage 5 et stocke de l'énergie électrique dans la première batterie 9, et dans le deuxième sens de rotation, le dispositif de transport 1 remonte le long de la ligne de guidage 5 et dépense de l'énergie électrique issue de la première batterie 9 et/ou de la seconde batterie 12. Ledit premier galet de roulement 13 est par exemple conçu pour rouler sur la ligne de guidage 5.

Par exemple, le dispositif de transport comprend une première courroie de transmission 14 reliant ladite partie tournante 11 et ledit premier galet de roulement 13. Ladite première courroie 14 permet en particulier de transmettre le mouvement de rotation de la partie tournante 11 au premier galet 13 lors de la remontée du dispositif de transport 1 le long de la ligne de guidage de la seconde altitude 4 vers la première altitude 3, et le mouvement de rotation du premier galet 13 à la partie tournante 11 lors de la descente du dispositif de transport 1 le long de la ligne de guidage 5 de la première altitude 3 vers la seconde altitude 4. Selon une autre alternative, la courroie de transmission 14 peut être remplacée par un engrenage ; le dispositif de transport 1 comprend alors un ou plusieurs engrenages reliant ladite partie tournante 11 et ledit premier galet de roulement 13.

De manière avantageuse, le dispositif de transport 1 comprend un moyen de freinage 17, 18, de préférence distinct du moteur 8 et du générateur 10, conçu pour limiter la vitesse maximale du dispositif de transport 1 lorsque ce dernier descend de la première altitude 3 vers la seconde altitude 4 le long de la ligne de guidage 4. Ledit moyen de freinage 17, 18 permet de conférer une sécurité optimale au dispositif de transport 1 et surtout à la charge transportée par ce dernier.

Selon une variante de réalisation, le dispositif de transport 1 comprend au moins un deuxième galet de roulement 16 conçu pour rouler le long de la ligne de guidage 5. Ledit deuxième galet de roulement 16 est de préférence distinct dudit premier galet de roulement 13, et à distance de ce dernier.

Selon un mode de réalisation particulier, ledit moyen de freinage 17, 18 est relié audit deuxième galet de roulement 16 pour limiter sa vitesse de sa rotation, lors de la descente du dispositif de transport 1 de la première altitude 3 vers la seconde altitude 4. Par exemple, ledit moyen de freinage 17, 18 comprend un frein rotatif 17 et une seconde courroie de transmission 18, laquelle relie ledit frein rotatif 17 et ledit deuxième galet de roulement 16. Le moyen de freinage 17, 18 est avantageusement conçu pour limiter la vitesse de rotation du deuxième galet 16 à une vitesse de rotation prédéterminée.

Alternativement ou en combinaison avec ce qui précède, ledit générateur 10 et ledit moyen de freinage 17, 18 sont, selon une variante particulière de l'invention, au moins en partie confondus. Ledit générateur 10 est ainsi avantageusement conçu pour pouvoir fonctionner en freinage régénératif afin de récupérer de l'énergie mécanique de freinage et la convertir en énergie électrique de freinage. Bien entendu, ledit générateur 10 est préférentiellement conçu pour pouvoir fonctionner en freinage régénératif au moins lors de la descente du dispositif de transport 1 de la première altitude 3 vers la seconde altitude 4. De manière avantageuse, ledit moyen de gestion électronique 21 est configuré pour pouvoir diriger ladite énergie électrique de freinage vers ladite première batterie 9, vers ledit moyen de réception de courant 22, ou à la fois vers ladite première batterie 9 et vers ledit moyen de réception de courant 22. Lorsque ledit moyen de gestion électronique 21 est configuré pour diriger ladite énergie électrique de freinage vers au moins ladite première batterie 9, il permet de recharger au moins en partie cette dernière. Lorsque ledit moyen de gestion électronique 21 est configuré pour diriger ladite énergie électrique de freinage vers au moins ledit moyen de réception de courant 22, il permet d'éviter de charger ou de trop charger ladite première batterie 9 (ce qui pourrait détériorer cette dernière), en transformant par exemple au moins une partie de l'énergie électrique de freinage en chaleur via ladite résistance 22 (constituant alors au moins une partie du moyen de réception de courant 22). Lorsque ledit moyen de gestion électronique 21 est configuré pour diriger ladite énergie électrique de freinage à la fois vers ladite première batterie 9 et ledit moyen de réception de courant 22, il permet d'augmenter le couple disponible pour le freinage du dispositif de transport 1, le générateur 10 pouvant produire un courant supérieur au courant que peut normalement recevoir la première batterie 9 puisque ledit moyen de réception de courant 22 absorbe le surplus de courant provenant dudit générateur 10 (la résistance 2 dissipe en particulier le surplus de courant, c'est-à-dire le courant de fuite, en chaleur). En effet, de manière générale, plus le couple de freinage est important, plus l'énergie électrique de freinage récupérée (c'est-à-dire produite par le générateur 10) est importante.

Selon un mode de réalisation particulier, non illustré aux figures, le dispositif de transport 1 comprend au moins une hélice reliée à un arbre, ladite hélice et ledit arbre étant conçus pour tourner autour d'un même axe de rotation lorsque le dispositif de transport 1 descend le long de la ligne de guidage 5, ledit arbre étant relié à ladite partie tournante 11 afin de l'entraîner en rotation selon un premier sens de rotation, lors de la descente du dispositif de transport 1 de la première altitude 3 vers la seconde altitude 4. La partie tournante 11 est par ailleurs avantageusement reliée audit premier galet 13 afin de l'entraîner en rotation, entraînant ainsi la remontée du dispositif de transport 1 de la seconde altitude 4 vers la première altitude 3. La remontée se fait avantageusement de façon que l'hélice ne s'opposent pas de manière significative au déplacement du dispositif de transport 1, par exemple la remontée se fait à une vitesse plus faible que la descente.

De manière avantageuse, le dispositif de transport 1 comprend un moyen de détection spatiale 23, 24 (non illustré) conçu pour déterminer la position, le déplacement, la vitesse, et/ou l'accélération du dispositif de transport 1 le long de ladite ligne de guidage 5. Ledit moyen de détection spatiale 23, 24 est éventuellement calibré. Avantageusement, ledit moyen de détection spatiale 23, 24 comprend au moins un système de géolocalisation par satellite 23 tel qu'un GPS (Global Positionning System - ou alternativement un système Galileo), un lecteur optique 24, un tachymètre, un accéléromètre, un inclinomètre, un compte-tours, un dynamomètre, un gyromètre, et/ou un gyroscope. Optionnellement, le dispositif de transport 1 comprend un moyen de commande de vitesse conçu pour modifier la vitesse en remontée du dispositif de transport 1 sur la base d'informations issues du moyen de détection spatiale 23, 24. Ledit moyen de commande de vitesse est avantageusement confondu avec le moyen de gestion électronique 21, c'est-à-dire que ce dernier est conçu pour contrôler la vitesse, et avantageusement le sens de déplacement (en montée ou en descente), du dispositif de transport 21 le long de ladite ligne de guidage 5. Selon un mode de réalisation particulier, ledit moyen de détection spatiale 23, 24 est conçu pour déterminer la position, le déplacement, la vitesse, et/ou l'accélération du dispositif de transport 1 le long de ladite ligne de guidage 5 à l'aide de données provenant de l'extérieur dudit dispositif de transport 1. En d'autres termes, selon ce dernier mode de réalisation, ledit moyen de détection spatiale 23, 24 est conçu pour prélever des données issues de l'environnement externe du dispositif de transport 1 et non des données issues du dispositif de transport 1 lui-même (comme par exemple le nombre de tour du premier galet 13). Selon une variante particulière, le moyen de détection spatiale 23, 24 comprend au moins un système de géolocalisation par satellite 23, de préférence un GPS (ou alternativement un système Galileo) et/ou un lecteur optique 24. La combinaison des deux systèmes (lecteur optique 24 et système de géolocalisation par satellite 23) est particulièrement avantageuse et permet de donner un positionnement précis du dispositif de transport 1 lorsqu'il évolue le long de ladite ligne de guidage 5 (que ce soit en montée ou en descente), comme illustré à la figure 9.

Selon un mode de réalisation préférentiel, lorsque le moyen de détection spatiale 23, 24 comprend au moins un lecteur optique 24, ladite ligne de guidage 5 présente une pluralité de marqueurs visuels disposés le long de cette dernière. Ces marqueurs visuels peuvent être constitués par exemple par des tronçons de ladite ligne de guidage 5 peints en blanc (les autres tronçons de la ligne de guidage 5 étant donc d'une autre couleur, un tronçon blanc ayant pour voisins immédiats deux tronçons d'une autre couleur). Ledit lecteur optique 24 est alors conçu pour détecter lesdits marqueurs visuels (par exemple, comme mentionné, des marques de peinture blanches) et envoyer un signal de détection visuelle respectif pour chaque marqueur visuel détecté au moyen de gestion électronique 21. Ce signal de détection visuelle est avantageusement associé, au sein dudit moyen de gestion électronique 21, à un positionnement (de préférence préenregistré) le long de ladite ligne de guidage 5.

Selon un mode de réalisation particulier de l'invention, le dispositif de transport 1 comprend une unité de contrôle (non illustrée), par exemple formée par ledit moyen de gestion électronique 21, conçue pour recevoir des informations du moyen de détection spatiale 23, 24, et à partir d'une valeur seuil supérieure prédéterminée (issue desdites informations), par exemple une vitesse maximale, ralentir la vitesse de rotation de la partie tournante 11 lorsque celle-ci est mise en rotation sous l'effet de la descente du dispositif de transport 1 de la première altitude 3 vers la seconde altitude 4, freinant ainsi ledit dispositif de transport 1. L'unité de contrôle comprend avantageusement des moyens de traitement électroniques appropriés pour piloter la partie tournante 11 à partir de données d'entrée en provenance de capteurs ou détecteurs. Une telle configuration permet de renforcer encore plus la sécurité procurée par le dispositif de transport 1 à ladite charge 2, puisqu'ils ne peuvent en descente dépasser ladite valeur seuil supérieure prédéterminée sans que, selon l'exemple illustré aux figures, le générateur 10 passe en quelque sorte en mode « *moteur* » et s'oppose à la descente du dispositif de transport 1, par exemple en bloquant ou freinant ledit premier galet 13 (ou ladite hélice). L'unité de contrôle et le moyen de commande de vitesse peuvent éventuellement être reliés ou confondus. Ainsi, l'unité de contrôle (et/ou ledit moyen de gestion électronique 21, ce dernier formant avantageusement ladite unité de contrôle ou étant confondue avec cette dernière) est de préférence reliée au moteur électrique 8 de manière à contrôler, sa vitesse (et donc éventuellement le freinage lorsque le moteur 8, avantageusement confondu avec le générateur 10, fonctionne en freinage régénératif) et/ou son sens de fonctionnement (ledit moteur 8 étant préférentiellement réversible) le long de ladite ligne de guidage 5. L'unité de contrôle (et/ou ledit moyen de gestion électronique 21) est donc de préférence conçue pour réaliser, à l'aide du moteur 8 et/ou dudit générateur 10, une fonction de freinage modulable dépendante de la vitesse et/ou du positionnement du dispositif de transport 1 le long de la ligne de guidage 5, et optionnellement une fonction d'activation du moteur 8 (en mode moteur, c'est-à-dire consommant de l'énergie) pour finir le trajet (au niveau de ladite seconde altitude 4 en particulier), ces fonctions se traduisant par une fonction de visée au but, garantissant la continuité du trajet entre le point de départ et le point d'arrivée.

Optionnellement, ladite unité de contrôle est en outre conçue pour recevoir des informations du moyen de détection spatiale 23, 24, et à partir d'une valeur seuil inférieure prédéterminée, par exemple une position, augmenter la vitesse de rotation de la partie tournante 11 lorsque celle-ci est mise en rotation sous l'effet de la descente du dispositif de transport 1 de la première altitude 3 vers la seconde altitude 4, augmentant ainsi la vitesse dudit dispositif de transport 1. Une telle configuration permet par exemple au dispositif de transport 1 d'amener la charge 2, telle qu'une personne, à la fin de sa descente le long de la ligne de guidage 5 et notamment au niveau de la seconde altitude 4. En résumé, cette dernière caractéristique optionnelle permet au dispositif de transport 1 de compléter la descente. Ceci peut être utile dans le cadre d'un transport à tyrolienne, la fin de la descente étant parfois fastidieuse pour certaines personnes (poids légers, arrivée avec faible pente, faible vitesse finale, freinage excessif, etc.).

Grâce à l'invention il est avantageusement possible de modifier et/ou réguler la vitesse de descente sous le contrôle de ladite unité de contrôle, pour par exemple compenser d'éventuels facteurs (vent contraire, traînée...) susceptibles d'affecter négativement la vitesse (dans le sens d'un ralentissement ou au contraire d'une accélération). Grâce à ce contrôle de vitesse en descente, l'expérience et la sécurité de l'utilisateur sont améliorées : l'utilisateur est en effet sûr de parvenir au point d'arrivée quelles que soient les conditions extérieures, et il ne risque pas de subir des vitesses trop élevées, notamment à l'arrivée.

Avantageusement, le dispositif de transport 1 comprend en outre un moyen de rechargement (non illustré) de ladite première batterie 9 (et/ou de ladite seconde batterie 12) avec un moyen de chargement externe. Le moyen de chargement externe peut être tout simplement une prise secteur. Ledit moyen de rechargement comprend par exemple au moins une prise embarquée (mâle ou femelle) et un câble conçu pour brancher ladite prise embarquée au moyen de chargement externe, ladite prise étant reliée électriquement à ladite première batterie 9 (et/ou à ladite seconde batterie 12). Alternativement, ledit moyen de chargement comprend un câble embarqué (par exemple déroulable) qui est conçu pour relier électriquement ladite première batterie 9 (et/ou de ladite seconde batterie 12) au moyen de chargement externe. Ceci permet d'éviter que ladite première batterie 9 (et/ou de ladite seconde batterie 12) soit complètement déchargée lorsque sur une période donnée, le bilan énergétique du dispositif de transport 1 est négatif, c'est-à-dire lorsque le dispositif de transport 1 dépense plus d'énergie à remonter (à vide donc) le long de la ligne de guidage 5 qu'il ne gagne d'énergie lorsqu'il descend (en embarquant ladite charge 2) le long de la ligne de guidage 5.

Selon un mode de réalisation particulier, illustré notamment à la figure 9, le dispositif de transport 1 comprend en outre un moyen de contrôle à distance 25 conçu pour commander à distance au moins un paramètre dudit dispositif de transport 1, tel que la vitesse, l'accélération, et/ou un sens d'évolution (en descente, de ladite première altitude 3 vers ladite seconde altitude 4, ou inversement en montée, de ladite seconde altitude 4 vers ladite première altitude 3) dudit dispositif de transport 1 le long de ladite ligne de guidage 5. Ledit moyen de contrôle à distance 25 comprend par exemple une antenne 25 (de préférence externe), et de préférence en outre une télécommande (non illustrée) conçue pour être reliée par liaison sans fil (par exemple liaison radio) à ladite antenne 25. Ladite télécommande est bien évidemment avantageusement distincte du reste du dispositif de transport 1, contrairement à ladite antenne 25 (qui elle est donc « *embarquée* »)*.* Ladite antenne 25 est de manière avantageuse reliée au moyen de gestion électronique 21, lequel permet donc avantageusement de mettre en œuvre une commande à distance du paramètre du dispositif de transport 1, tel que la vitesse, l'accélération, et/ou le sens d'évolution du dispositif de transport 1 le long de la ligne de guidage 5. Indépendamment ou en combinaison de ce qui précède, le dispositif de transport 1 peut en outre comprendre un écran d'affichage 26 relié audit moyen de gestion électronique 21 et conçu pour afficher au moins un paramètre d'état dudit dispositif de transport 1. Ledit paramètre d'état comprend par exemple un niveau de charge de ladite première batterie 9 (et/ou de ladite seconde batterie 12), un indice d'usure, une température (par exemple la température de ladite résistance 22), etc. Lorsque le paramètre d'état comprend un niveau de charge de ladite première batterie 9, ceci permet de savoir si et quand il est nécessaire de recharger cette dernière, de préférence à l'aide dudit moyen de rechargement, par exemple sur une prise secteur.

L'invention concerne en outre, selon un deuxième aspect, un ensemble de transport comprenant d'une part une ligne de guidage 5 et d'autre part un dispositif de transport 1 pour transporter une charge 2 d'une première altitude 3 à une seconde altitude 4 inférieure à la première altitude 3 en étant accroché à ladite ligne de guidage 5 et en descendant le long de cette dernière par gravité, ledit dispositif de transport 1 étant conforme ce qui est décrit ci-avant et ci-après.

L'invention concerne en outre, selon un troisième aspect, un procédé de transport comprenant une étape de transport d'une charge d'une première altitude 3 à une seconde altitude 4 inférieure à la première altitude 3 par un dispositif de transport 1, lors de laquelle le dispositif de transport 1 est accroché à une ligne de guidage 5 et descend le long de cette dernière par gravité. Ledit dispositif de transport 1 est de préférence conforme à ce qui est décrit ci-avant et ci-après. Le procédé de transport est de préférence mis en oeuvre à l'aide du dispositif de transport 1 (et même de l'ensemble de transport) décrit précédemment. Ainsi, de façon préférentielle, la description précédente concernant le dispositif de transport s'applique donc également au procédé de transport de l'invention, et inversement.

Le procédé comprend en outre au moins :
- une étape de génération d'électricité, lors de laquelle une partie tournante 11 d'un générateur électrique 10 du dispositif de transport 1 est mise en rotation sous l'effet de la descente du dispositif de transport 1 de la première altitude 3 vers la seconde altitude 4,
- une étape de rechargement d'une première batterie 9 du dispositif de transport 1 grâce à l'électricité générée lors de ladite étape de génération,
- une étape de remontage du dispositif de transport 1 de la seconde altitude 4 vers la première altitude 3, le long de ladite ligne de guidage 5, grâce à un moteur électrique 8 alimenté au moins par ladite première batterie 9,
- une étape de détection, lors de laquelle on détecte que le niveau de charge de ladite première batterie 9 dépasse une valeur seuil de charge prédéterminée,
- une étape d'émission, par ladite première batterie 9, d'un courant de fuite,
- une étape d'absorption, par un moyen de réception de courant 22, dudit courant de fuite provenant de ladite première batterie 9.

De manière avantageuse, le procédé de transport comprend une étape de détection spatiale lors de laquelle la position, le déplacement, la vitesse, et/ou l'accélération du dispositif de transport 1 le long de ladite ligne de guidage 5 est déterminé(e), de préférence réalisée à l'aide du moyen de détection spatiale 23, 24. Ladite étape de détection spatiale est préférentiellement réalisée à l'aide dudit moyen de détection spatiale 23, 24. Selon un mode de réalisation particulier de l'invention, le procédé de transport comprend une étape de contrôle lors de laquelle des informations issues de l'étape de détection spatiale sont transférées, et à partir d'une valeur seuil supérieure prédéterminée (issue desdites informations), par exemple une vitesse maximale, ralentir la vitesse de rotation de la partie tournante 11 lorsque celle-ci est mise en rotation sous l'effet de la descente du dispositif de transport 1 de la première altitude 3 vers la seconde altitude 4, freinant ainsi ledit dispositif de transport 1. Ladite étape de contrôle est de préférence réalisée à l'aide de ladite unité de contrôle (et/ou dudit moyen de gestion électronique 21).

Selon un aspect particulier de l'invention, celle-ci peut concerner un dispositif de transport 1 pour transporter une charge 2 d'une première altitude 3 à une seconde altitude 4 inférieure à la première altitude 3 en étant accroché à une ligne de guidage 5 et en descendant le long de cette dernière par gravité, ledit dispositif de transport 1 étant un dispositif de transport 1 par tyrolienne, ledit dispositif 1 étant caractérisé en ce qu'il comprend :
- un moteur électrique 8, conçu pour au moins faire remonter le dispositif de transport 1 de la seconde altitude 4 vers la première altitude 3, le long de ladite ligne de guidage 5,
- une première batterie 9, conçue pour alimenter ledit moteur électrique 8,
- un générateur électrique 10 comprenant une partie tournante 11, ledit générateur électrique 10 étant conçu pour recharger ladite première batterie 9 lorsque ladite partie tournante 11 est mise en rotation sous l'effet de la descente du dispositif de transport 1 de la première altitude 3 vers la seconde altitude 4,
- un moyen de détection spatiale 23, 24 conçu pour déterminer la position, le déplacement, la vitesse, et/ou l'accélération du dispositif de transport 1 le long de ladite ligne de guidage 5,
- un moteur électrique 8, conçu pour au moins faire remonter le dispositif de transport 1 de la seconde altitude 4 vers la première altitude 3, le long de ladite ligne de guidage 5,
- une première batterie 9, conçue pour alimenter ledit moteur électrique 8,
- un générateur électrique 10 comprenant une partie tournante 11, ledit générateur électrique 10 étant conçu pour recharger ladite première batterie 9 lorsque ladite partie tournante 11 est mise en rotation sous l'effet de la descente du dispositif de transport 1 de la première altitude 3 vers la seconde altitude 4.

Ledit dispositif de transport 1 est de préférence, au moins pour les éléments communs, tel que celui décrit précédemment.

Selon un autre aspect, de préférence associé à l'aspect particulier de l'invention décrit ci-avant, l'invention peut en outre concerner un procédé de transport comprenant une étape de transport d'une charge 2 d'une première altitude 3 à une seconde altitude 4 inférieure à la première altitude 3 par un dispositif de transport 1, lors de laquelle le dispositif de transport 1 est accroché à une ligne de guidage 5 et descend le long de cette dernière par gravité, ledit dispositif de transport 1 étant un dispositif de transport 1 par tyrolienne, le procédé étant caractérisé en ce qu'il comprend en outre au moins :
- une étape de génération d'électricité, lors de laquelle une partie tournante 11 d'un générateur électrique 10 du dispositif de transport 1 est mise en rotation sous l'effet de la descente du dispositif de transport 1 de la première altitude 3 vers la seconde altitude 4,
- une étape de rechargement d'une première batterie 9 du dispositif de transport 1 grâce à l'électricité générée lors de ladite étape de génération,
- une étape de remontage du dispositif de transport 1 de la seconde altitude 4 vers la première altitude 3, le long de ladite ligne de guidage 5, grâce à un moteur électrique 8 alimenté au moins par ladite première batterie 9, et
- une étape de détection spatiale lors de laquelle la position, le déplacement, la vitesse, et/ou l'accélération du dispositif de transport 1 le long de ladite ligne de guidage 5 est déterminée.

Ledit procédé de transport est de préférence, au moins pour les éléments communs, tel que celui décrit précédemment.

Le dispositif de transport 1 et le procédé de transport de l'invention sont ainsi particulièrement adaptés pour le transport répété d'une charge 2, notamment d'une personne, depuis un point haut vers un point bas, dans des conditions de sécurité optimales et de manière particulièrement pratique, rapide et économe en énergie.

### POSSIBILITE D'APPLICATION INDUSTRIELLE

L'invention est particulièrement adaptée à la réalisation et la mise en œuvre de dispositifs de transport par tyrolienne économes en énergie.

## Revendications

1. - Dispositif de transport (1) pour transporter une charge (2) d'une première altitude (3) à une seconde altitude (4) inférieure à la première altitude (3) en étant accroché à une ligne de guidage (5) et en descendant le long de cette dernière par gravité, ledit dispositif de transport (1) comprenant
- un moteur électrique (8), conçu pour au moins faire remonter le dispositif de transport (1) de la seconde altitude (4) vers la première altitude (3), le long de ladite ligne de guidage (5),
- une première batterie (9), conçue pour alimenter ledit moteur électrique (8),
- un générateur électrique (10) comprenant une partie tournante (11), ledit générateur électrique (10) étant conçu pour recharger ladite première batterie (9) lorsque ladite partie tournante (11) est mise en rotation sous l'effet de la descente du dispositif de transport (1) de la première altitude (3) vers la seconde altitude (4), ledit dispositif de transport (1) étant **caractérisé en ce qu'**il comprend :
- un moyen de gestion électronique (21), configuré d'une part pour détecter un niveau de charge de ladite première batterie (9), et d'autre part pour entraîner une émission par ladite première batterie (9) d'un courant de fuite lorsque ledit moyen de gestion électronique (21) détecte que le niveau de charge de ladite première batterie (9) dépasse une valeur seuil de charge prédéterminée,
- au moins un moyen de réception de courant (22), conçu pour absorber ledit courant de fuite provenant de ladite première batterie (9).

2. - Dispositif de transport (1) selon la revendication précédente, **caractérisé en ce que** ledit moteur électrique (8) et ledit générateur électrique (10) sont confondus.

3. - Dispositif de transport (1) selon l'une quelconque des revendications précédentes, **caractérisé en ce que** ledit moteur électrique (8) et ladite première batterie (9) sont dimensionnés pour pouvoir faire remonter le dispositif de transport (1) le long de ladite ligne de guidage (5) de ladite seconde altitude (4) vers ladite première altitude (3) uniquement sans ladite charge (2).

4. - Dispositif de transport (1) selon l'une quelconque des revendications précédentes, **caractérisé en ce qu'**il est conçu pour récupérer de l'énergie cinétique lorsqu'il descend le long de ladite ligne de guidage (5) de la première altitude (3) vers la seconde altitude (4), afin de mettre en rotation ladite partie tournante (11), et ainsi transformer ladite énergie cinétique en énergie électrique pour recharger la première batterie (9).

5. - Dispositif de transport (1) selon l'une quelconque des revendications précédentes, **caractérisé en ce que** ladite première batterie (9) comprend un supercondensateur.

6. - Dispositif de transport (1) selon l'une quelconque des revendications précédentes, **caractérisé en ce qu'**il comprend en outre une seconde batterie (12) distincte de la première batterie (9) et présentant une vitesse de charge plus lente que cette dernière, ladite seconde batterie (12) étant également conçue pour alimenter ledit moteur électrique (8), en particulier lorsque ladite première batterie (9) est déchargée, ladite seconde batterie (12) étant de préférence une batterie lithium-ion.

7. - Dispositif de transport (1) selon l'une quelconque des revendications précédentes, **caractérisé en ce qu'**il comprend un moyen de freinage (17, 18), de préférence distinct du moteur (8) et du générateur (10), conçu pour limiter la vitesse maximale du dispositif de transport (1) lorsque ce dernier descend de la première altitude (3) vers la seconde altitude (4) le long de la ligne de guidage 5).

8. - Dispositif de transport (1) selon la revendication précédente, **caractérisé en ce que** ledit générateur (10) et ledit moyen de freinage (17, 18) sont au moins en partie confondus, ledit générateur (10) étant ainsi conçu pour pouvoir fonctionner en freinage régénératif afin de récupérer de l'énergie mécanique de freinage et la convertir en énergie électrique de freinage, ledit moyen de gestion électronique (21) étant de préférence configuré pour pouvoir diriger ladite énergie électrique de freinage vers ladite première batterie (9), vers ledit moyen de réception de courant (22), ou à la fois vers ladite première batterie (9) et vers ledit moyen de réception de courant (22).

9. - Dispositif de transport (1) selon l'une quelconque des revendications précédentes, **caractérisé en ce qu'**il comprend un moyen de détection spatiale (23, 24) conçu pour déterminer la position, le déplacement, la vitesse, et/ou l'accélération du dispositif de transport (1) le long de ladite ligne de guidage (5), ledit moyen de détection spatiale comprenant avantageusement au moins un système de géolocalisation par satellite (23) tel qu'un GPS, un lecteur optique (24), un tachymètre, un accéléromètre, un inclinomètre, un compte-tours, un dynamomètre, un gyromètre, et/ou un gyroscope, ledit moyen de détection spatiale (23, 24) étant de préférence conçu pour déterminer la position, le déplacement, la vitesse, et/ou l'accélération du dispositif de transport (1) le long de ladite ligne de guidage (5) à l'aide de données provenant de l'extérieur dudit dispositif de transport (1).

10. - Dispositif de transport (1) selon la revendication précédente, **caractérisé en ce qu'**il comprend une unité de contrôle, par exemple formée par ledit moyen de gestion électronique (21), conçue pour recevoir des informations du moyen de détection spatiale (23, 24), et à partir d'une valeur seuil supérieure prédéterminée, par exemple une vitesse maximale, ralentir la vitesse de rotation de la partie tournante (11) lorsque celle-ci est mise en rotation sous l'effet de la descente du dispositif de transport (1) de la première altitude (3) vers la seconde altitude (4), freinant ainsi ledit dispositif de transport (1).

11. - Dispositif de transport (1) selon la revendication précédente, **caractérisé en ce que** ladite unité de contrôle est en outre conçue pour recevoir des informations du moyen de détection spatiale (23, 24), et à partir d'une valeur seuil inférieure prédéterminée, par exemple une position, augmenter la vitesse de rotation de la partie tournante (11) lorsque celle-ci est mise en rotation sous l'effet de la descente du dispositif de transport (1) de la première altitude (3) vers la seconde altitude (4), augmentant ainsi la vitesse dudit dispositif de transport (1).

12. - Dispositif de transport (1) selon l'une quelconque des revendications précédentes, **caractérisé en ce que** ledit moyen de réception de courant (22) comprend de préférence au moins une résistance (22), ledit dispositif de transport (1) comprenant en outre un échangeur thermique relié à ladite résistance (22) pour refroidir cette dernière, ledit échangeur thermique étant avantageusement conçu pour refroidir ladite résistance (22) thermique par déplacement d'air lors de la descente du dispositif de guidage (1) de la première altitude (3) vers ladite seconde altitude (4) le long de ladite ligne de guidage (5).

13. - Ensemble de transport comprenant d'une part une ligne de guidage (5) et d'autre part un dispositif de transport (1) pour transporter une charge (2) d'une première altitude (3) à une seconde altitude (4) inférieure à la première altitude (3) en étant accroché à ladite ligne de guidage (5) et en descendant le long de cette dernière par gravité, ledit dispositif de transport (1) étant conforme à l'une quelconque des revendications précédentes.

14. - Ensemble de transport selon la revendication précédente lorsque le dispositif de transport (1) est conforme au moins à la revendication 9, **caractérisé en ce que** ladite ligne de guidage (5) présente une pluralité de marqueurs visuels disposés le long de cette dernière, ledit lecteur optique (24) étant conçu pour détecter lesdits marqueurs visuels et envoyer un signal de détection visuelle respectif pour chaque marqueur visuel détecté au moyen de gestion électronique (21).

15. - Procédé de transport comprenant une étape de transport d'une charge (2) d'une première altitude (3) à une seconde altitude (4) inférieure à la première altitude (3) par un dispositif de transport (1), lors de laquelle le dispositif de transport (1) est accroché à une ligne de guidage (5) et descend le long de cette dernière par gravité, le procédé étant **caractérisé en ce qu'**il comprend en outre au moins :
- une étape de génération d'électricité, lors de laquelle une partie tournante (11) d'un générateur électrique (10) du dispositif de transport (1) est mise en rotation sous l'effet de la descente du dispositif de transport (1) de la première altitude (3) vers la seconde altitude (4),
- une étape de rechargement d'une première batterie (9) du dispositif de transport (1) grâce à l'électricité générée lors de ladite étape de génération,
- une étape de remontage du dispositif de transport (1) de la seconde altitude (4) vers la première altitude (3), le long de ladite ligne de guidage (5), grâce à un moteur électrique (8) alimenté au moins par ladite première batterie (9),
- une étape de détection, lors de laquelle on détecte que le niveau de charge de ladite première batterie (9) dépasse une valeur seuil de charge prédéterminée,
- une étape d'émission, par ladite première batterie (9), d'un courant de fuite,
- une étape d'absorption, par un moyen de réception de courant (22), dudit courant de fuite provenant de ladite première batterie (9).

## Patentansprüche

1. Transportvorrichtung (1) zum Transportieren einer Last (2) von einer ersten Höhe (3) auf eine zweite Höhe (4), die niedriger als die erste Höhe (3) ist, indem sie an einer Führungslinie (5) eingehakt wird und entlang dieser letzteren durch Schwerkraft herunterfährt, die Transportvorrichtung (1) umfassend:
- einen Elektromotor (8), der mindestens zum Herauffahrenlassen der Transportvorrichtung (1) entlang der Führungslinie (5) von der zweiten Höhe (4) in Richtung der ersten Höhe (3) ausgelegt ist,
- einen ersten Akkumulator (9), der zum Speisen des Elektromotors (8) ausgelegt ist,
- einen elektrischen Generator (10), umfassend einen rotierenden Teil (11), wobei der elektrische Generator (10) zum Aufladen des ersten Akkumulators (9) ausgelegt ist, wenn der rotierende Teil (11) unter der Einwirkung des Herunterfahrens der Transportvorrichtung (1) von der ersten Höhe (3) in Richtung der zweiten Höhe (4) in Drehung versetzt wird, wobei die Transportvorrichtung (1) **dadurch gekennzeichnet ist, dass** sie umfasst:
- ein elektronisches Verwaltungsmittel (21), das einerseits zum Erfassen eines Ladezustands des ersten Akkumulators (9) und andererseits zum Bewirken einer Abgabe durch den Akkumulator (9) eines Leckstroms konfiguriert ist, wenn das elektronische Verwaltungsmittel (21) erfasst, dass der Ladezustand des ersten Akkumulators (9) einen zuvor bestimmten Ladeschwellenwert überschreitet,
- mindestens ein Stromaufnahmemittel (22), das zum Absorbieren des Leckstroms ausgelegt ist, das von dem ersten Akkumulator (9) stammt.

2. Transportvorrichtung (1) nach dem vorstehenden Anspruch,
**dadurch gekennzeichnet, dass** der Elektromotor (8) und der elektrische Generator (10) zusammengenommen sind.

3. Transportvorrichtung (1) nach einem der vorstehenden Ansprüche,
**dadurch gekennzeichnet, dass** der Elektromotor (8) und der erste Akkumulator (9) zum Herauffahrenlassen der Transportvorrichtung (1) entlang der Führungslinie (5) von der zweiten Höhe (4) in Richtung der ersten Höhe (3) nur ohne die Last (2) bemessen sind.

4. Transportvorrichtung (1) nach einem der vorstehenden Ansprüche,
**dadurch gekennzeichnet, dass** sie zum Rückgewinnen der kinetischen Energie ausgelegt ist, wenn sie entlang der Führungslinie (5) von der ersten Höhe (3) in Richtung der zweiten Höhe (4) herunterfährt, um das rotierende Teil (11) in Drehung zu versetzen und so die kinetische Energie in elektrische Energie zum Aufladen des ersten Akkumulators (9) umzuwandeln.

5. Transportvorrichtung (1) nach einem der vorstehenden Ansprüche,
**dadurch gekennzeichnet, dass** der erste Akkumulator (9) einen Superkondensator umfasst.

6. Transportvorrichtung (1) nach einem der vorstehenden Ansprüche,
**dadurch gekennzeichnet, dass** sie ferner einen zweiten Akkumulator (12) umfasst, der sich von dem ersten Akkumulator (9) unterscheidet und eine langsamere Ladegeschwindigkeit als dieser letztere aufweist, wobei der zweite Akkumulator (12) auch zum Speisen des Elektromotors (8) ausgelegt ist, insbesondere wenn der erste Akkumulator (9) entladen ist, wobei der zweite Akkumulator (12) vorzugsweise ein Lithium-Ionen-Akkumulator ist.

7. Transportvorrichtung (1) nach einem der vorstehenden Ansprüche,
**dadurch gekennzeichnet, dass** sie ein Bremsmittel (17, 18) umfasst, das vorzugsweise von dem Motor (8) und dem Generator (10) getrennt ist, das zum Begrenzen der Höchstgeschwindigkeit der Transportvorrichtung (1) ausgelegt ist, wenn diese entlang der Führungslinie 5) von der ersten Höhe (3) in Richtung der zweiten Höhe (4) herunterfährt.

8. Transportvorrichtung (1) nach dem vorstehenden Anspruch,
**dadurch gekennzeichnet, dass** der Generator (10) und das Bremsmittel (17, 18) mindestens teilweise zusammengenommen sind, wobei der Generator (10) ausgelegt ist, um in einem regenerativen Bremsbetrieb arbeiten zu können, um mechanische Bremsenergie zurückzugewinnen und sie in elektrische Bremsenergie umzuwandeln, wobei das elektronische Verwaltungsmittel (21) vorzugsweise konfiguriert ist, um die elektrische Bremsenergie in Richtung des ersten Akkumulators (9), in Richtung des Stromaufnahmemittels (22) oder gleichzeitig in Richtung des ersten Akkumulators (9) und in Richtung des Stromaufnahmemittels (22) leiten zu können.

9. Transportvorrichtung (1) nach einem der vorstehenden Ansprüche,
**dadurch gekennzeichnet, dass** sie ein Mittel (23, 24) für eine räumliche Erfassung umfasst, das zum Bestimmen der Position, der Bewegung, der Geschwindigkeit und/oder der Beschleunigung der Transportvorrichtung (1) entlang der Führungslinie (5) ausgelegt ist, das Mittel für die räumliche Erfassung umfassend vorteilhafterweise mindestens ein Global-Positioning-System (23) wie etwa ein GPS, einen optischen Leser (24), ein Tachometer, einen Beschleunigungsmesser, einen Neigungsmesser, einen Tourenmesser, ein Dynamometer, ein Gyrometer und/oder ein Gyroskop, wobei das Mittel (23, 24) für die räumliche Erfassung vorzugsweise zum Bestimmen der Position, der Bewegung, der Geschwindigkeit und/oder der Beschleunigung der Transportvorrichtung (1) entlang der Führungslinie (5) unter Verwendung von Daten ausgelegt ist, die von außerhalb der Transportvorrichtung (1) stammen.

10. Transportvorrichtung (1) nach dem vorstehenden Anspruch,
**dadurch gekennzeichnet, dass** sie eine Steuereinheit umfasst, die beispielsweise durch das elektronische Verwaltungsmittel (21) ausgebildet ist, die zum Aufnehmen von Informationen von dem Mittel (23, 24) für die räumliche Erfassung, und ab einem zuvor bestimmten oberen Schwellenwert, beispielsweise einer Höchstgeschwindigkeit, Verlangsamen der Drehgeschwindigkeit des rotierenden Teils (11) ausgelegt ist, wenn dieses letztere unter der Wirkung des Herunterfahrens der Transportvorrichtung (1) von der ersten Höhe (3) in Richtung der zweiten Höhe (4) in Drehung versetzt wird, wobei so die Transportvorrichtung (1) gebremst wird.

11. Transportvorrichtung (1) nach dem vorstehenden Anspruch,
**dadurch gekennzeichnet, dass** die Steuereinheit ferner zum Aufnehmen von Informationen von dem Mittel (23, 24) für die räumliche Erfassung, und ab einem zuvor bestimmten unteren Schwellenwert, beispielsweise einer Position, Erhöhen der Drehgeschwindigkeit des rotierenden Teils (11) ausgelegt ist, wenn dieses letztere unter der Wirkung des Herunterfahrens der Transportvorrichtung (1) von der ersten Höhe (3) in Richtung der zweiten Höhe (4) in Drehung versetzt wird, wobei so die Geschwindigkeit der Transportvorrichtung (1) erhöht wird.

12. Transportvorrichtung (1) nach einem der vorstehenden Ansprüche,
**dadurch gekennzeichnet, dass** das Stromaufnahmemittel (22) vorzugsweise mindestens einen Widerstand (22) umfasst, die Transportvorrichtung (1) ferner umfassend einen Wärmetauscher, der mit dem Widerstand (22) verbunden ist, zum Kühlen dieses letzteren, wobei der Wärmetauscher vorteilhafterweise zum Kühlen des thermischen Widerstands (22) durch Bewegung von Luft bei dem Herunterfahren der Führungsvorrichtung (1) von der ersten Höhe (3) in Richtung der zweiten Höhe (4) entlang der Führungslinie (5) ausgelegt ist.

13. Transportanordnung, umfassend einerseits eine Führungslinie (5) und andererseits eine Transportvorrichtung (1) zum Transportieren einer Last (2) von einer ersten Höhe (3) auf eine zweite Höhe (4), die niedriger als die erste Höhe (3) ist, indem sie an der Führungslinie (5) eingehakt wird und entlang dieser durch Schwerkraft herunterfährt, wobei die Transportvorrichtung (1) einem der vorstehenden Ansprüche entspricht.

14. Transportanordnung nach dem vorstehenden Anspruch, wenn die Transportvorrichtung (1) mindestens dem Anspruch 9 entspricht,
**dadurch gekennzeichnet, dass** die Führungslinie (5) eine Vielzahl von optischen Markierungen aufweist, die entlang dieser letzteren angeordnet sind, wobei der optische Leser (24) zum Erfassen der visuellen Markierungen und Senden eines jeweiligen Signals der visuellen Erfassung für jede erfasste visuelle Markierung an das elektronische Verwaltungsmittel (21) ausgelegt ist.

15. Transportverfahren, umfassend einen Schritt des Transportierens einer Last (2) von einer ersten Höhe (3) auf eine zweite Höhe (4), die niedriger als die erste Höhe (3) ist, durch eine Transportvorrichtung (1), bei dem die Transportvorrichtung (1) an einer Führungslinie (5) eingehakt ist und durch Schwerkraft entlang dieser herunterfährt, wobei das Verfahren
**dadurch gekennzeichnet ist, dass** es ferner mindestens umfasst:
- einen Schritt zum Erzeugen von Elektrizität, bei dem ein rotierender Teil (11) eines elektrischen Generators (10) der Transportvorrichtung (1) unter der Wirkung des Herunterfahrens der Transportvorrichtung (1) von der ersten Höhe (3) in Richtung der zweiten Höhe (4) in Drehung versetzt wird,
- einen Schritt zum Wiederaufladen eines ersten Akkumulators (9) der Transportvorrichtung (1) dank der Elektrizität, die bei dem Erzeugungsschritt erzeugt wird,
- einen Schritt zum Herauffahren der Transportvorrichtung (1) von der zweiten Höhe (4) in Richtung der ersten Höhe (3) entlang der Führungslinie (5) dank einem Elektromotor (8), der mindestens durch den ersten Akkumulator (9) gespeist wird,
- einen Schritt zum Erkennen, bei dem erfasst wird, dass der Ladezustand des ersten Akkumulators (9) einen zuvor bestimmten Ladeschwellenwert überschreitet,
- einen Schritt zum Abgeben eines Leckstroms durch den ersten Akkumulator (9),
- einen Schritt zum Absorbieren des Leckstroms, der von dem ersten Akkumulator (9) stammt, durch ein Stromaufnahmemittel (22).

## Claims

1. Transport device (1) for transporting a load (2) from a first altitude (3) to a second altitude (4) lower than the first altitude (3) by being hooked to a guide line (5) and descending along the guide line by gravity, the transport device (1) comprising:
- an electric motor (8), designed to at least raise the transport device (1) from the second altitude (4) to the first altitude (3), along the guide line (5),
- a first battery (9), designed to power the electric motor (8),
- an electric generator (10) comprising a rotating portion (11), the electric generator (10) being designed to recharge the first battery (9) when the rotating portion (11) is rotated as the transport device (1) descends from the first altitude (3) to the second altitude (4), the transport device (1) being **characterized in that** it comprises:
- electronic management means (21), configured on the one hand to detect a charge level of the first battery (9), and on the other hand to cause the first battery (9) to emit a leakage current when the electronic management means (21) detects that the charge level of the first battery (9) exceeds a predetermined charge threshold value,
- at least one current-receiving means (22), designed to absorb the leakage current from the first battery (9).

2. Transport device (1) according to the preceding claim, **characterized in that** the electric motor (8) and the electric generator (10) are merged.

3. Transport device (1) according to either of the preceding claims,
**characterized in that** the electric motor (8) and the first battery (9) are dimensioned to be able to raise the transport device (1) along the guide line (5) from the second altitude (4) to the first altitude (3) solely without the load (2).

4. Transport device (1) according to any of the preceding claims,
**characterized in that** it is designed to recover kinetic energy as it descends along the guide line (5) from the first altitude (3) to the second altitude (4), in order to rotate the rotating portion (11), and thus transform the kinetic energy into electrical energy to recharge the first battery (9).

5. Transport device (1) according to any of the preceding claims,
**characterized in that** the first battery (9) comprises a supercapacitor.

6. Transport device (1) according to any of the preceding claims,
**characterized in that** it further comprises a second battery (12) separate from the first battery (9) and having a slower charging speed than the first battery, the second battery (12) also being designed to power the electric motor (8), in particular when the first battery (9) is discharged, the second battery (12) preferably being a lithium-ion battery.

7. Transport device (1) according to any of the preceding claims,
**characterized in that** it comprises a braking means (17, 18), preferably separate from the motor (8) and the generator (10), which is designed to limit the maximum speed of the transport device (1) as it descends from the first altitude (3) to the second altitude (4) along the guide line 5).

8. Transport device (1) according to the preceding claim,
**characterized in that** the generator (10) and the braking means (17, 18) are at least partly merged, the generator (10) thus being designed to be able to operate with regenerative braking in order to recover mechanical braking energy and convert it into electrical braking energy, the electronic management means (21) preferably being configured to be able to direct the electrical braking energy to the first battery (9), to the current-receiving means (22), or to both the first battery (9) and the current-receiving means (22).

9. Transport device (1) according to any of the preceding claims,
**characterized in that** it comprises a spatial detection means (23, 24) designed to determine the position, movement, speed and/or acceleration of the transport device (1) along the guide line (5), the spatial detection means advantageously comprising at least one satellite geolocation system (23) such as a GPS, an optical reader (24), a tachometer, an accelerometer, an inclinometer, a revolution counter, a dynamometer, a gyrometer, and/or a gyroscope, the spatial detection means (23, 24) preferably being designed to determine the position, movement, speed, and/or acceleration of the transport device (1) along the guide line (5) using data from outside the transport device (1).

10. Transport device (1) according to the preceding claim,
**characterized in that** it comprises a control unit, for example formed by the electronic management means (21), which is designed to receive information from the spatial detection means (23, 24), and from a predetermined upper threshold value, for example a maximum speed, to slow down the rotation speed of the rotating portion (11) when it is rotated as the transport device (1) descends from the first altitude (3) to the second altitude (4), thus braking said transport device (1).

11. Transport device (1) according to the preceding claim,
**characterized in that** the control unit is further designed to receive information from the spatial detection means (23, 24), and from a predetermined lower threshold value, e.g., a position, increase the rotational speed of the rotating portion (11) when it is rotated as the transport device (1) descends from the first altitude (3) to the second altitude (4), thus increasing the speed of the transport device (1).

12. Transport device (1) according to any of the preceding claims,
**characterized in that** the current-receiving means (22) preferably comprises at least one resistor (22), the transport device (1) further comprising a heat exchanger connected to the resistor (22) for cooling it, the heat exchanger advantageously being designed to cool the resistor (22) thermally by the movement of air as the guide device (1) descends from the first altitude (3) to the second altitude (4) along the guide line (5).

13. Transport assembly comprising, on the one hand, a guide line (5) and, on the other hand, a transport device (1) for transporting a load (2) from a first altitude (3) to a second altitude (4) lower than the first altitude (3) by being hooked to the guide line (5) and descending along the guide line by gravity, the transport device (1) being consistent with any of the preceding claims.

14. Transport assembly according to the preceding claim when the transport device (1) is consistent at least with claim 9, **characterized in that** the guide line (5) has a plurality of visual markers arranged along it, the optical reader (24) being designed to detect the visual markers and send a relevant visual detection signal for each detected visual marker to the electronic management means (21).

15. Transport method comprising a step of transporting a load (2) from a first altitude (3) to a second altitude (4) lower than the first altitude (3) by a transport device (1), during which the transport device (1) is hooked to a guide line (5) and descends along the guide line by gravity, the method being
**characterized in that** it further comprises at least:
- a power generation step, in which a rotating portion (11) of an electric generator (10) of the transport device (1) is rotated as the transport device (1) descends from the first altitude (3) to the second altitude (4),
- a step of recharging a first battery (9) of the transport device (1) using the power generated during the generation step,
- a step of raising the transport device (1) from the second altitude (4) to the first altitude (3), along the guide line (5), by means of an electric motor (8) powered at least by the first battery (9),
- a detection step, in which it is detected that the charge level of the first battery (9) exceeds a predetermined charge threshold value,
- a step in which the first battery (9) emits a leakage current,
- a step of absorbing, by a current-receiving means (22), the leakage current from the first battery (9).
